# EUROPÄISCHE PATENTSCHRIFT

(11) **EP 1 512 933 B1**
(45) Veröffentlichungstag und Bekanntmachung des Hinweises auf die Patenterteilung: **23.03.2016**
(21) Anmeldenummer: 04020342.4
(22) Anmeldetag: 27.08.2004
(51) Int. Cl.: F28F 21/02, H05B 3/14

(54) **Wärmeleitplatten aus expandiertem Graphit sowie Verfahren zu ihrer Herstellung**
Heat conduction plate made of expanded graphite and method of fabrication thereof
Plate conductrice de chaleur en graphite expansé et sa méthode de fabrication

(30) Priorität: 04.09.2003 DE 10341255
(43) Veröffentlichungstag der Anmeldung: 09.03.2005
(73) Patentinhaber: SGL Carbon SE, 65201 Wiesbaden (DE)
(72) Erfinder: Guckert, Werner, 86674 Baar (DE); Neuert, Richard, Dr., 86637 Hohenreichen/Wertingen (DE); Kienberger, Wolfgang, 86672 Thierhaupten (DE); Kipfelsberger, Christian, Prof. Dr., 95199 Naila (DE)

(56) Entgegenhaltungen:
- DE-A1- 10 049 230
- DE-A1- 10 060 838
- DE-C1- 19 602 606
- JP-A- 2001 177 024
- US-B1- 6 210 652

## Beschreibung

Die vorliegende Erfindung betrifft Fußboden-, Wand-, Decken- u.a. flächig angeordneten Heizungen sowie Klimadecken mit Wärmeleitplatten aus expandiertem Graphit ohne Bindemittel mit bevorzugter Wärmeleitung parallel zur Plattenfläche, sowie Verfahren zu deren Herstellung zur Wärmeübertragung und Wärmeabfuhr in Automobilen, in Maschinen und Anlagen und in temperierten Behältern, beispielsweise für die Aufbewahrung von Lebensmitteln. Solche Heizungen sind aus DE10049230 A1 bekannt. Dieses Dokument bildet den nächstliegenden Stand der Technik zu Anspruch 1.

In Verbindung mit Fußboden-, Wand- und Deckenheizungen werden zur Erzielung eines angenehmen Raumklimas spezielle wärmeleitende Heizschichten eingesetzt. Leitfähige Estriche, Putze u.a. Heizschichten, welche zur Verbesserung der Wärmeleitfähigkeit Zusätze aus Graphit enthalten, sind aus den Patentanmeldungen DE 196 22 788 A, DE 100 49 230 A und DE 198 02 230 A, DE 195 38 686 A, und DE 196 00 228 A bekannt.

In den Patentanmeldungen DE 41 17 077 A, DE 41 17 074 A und DE 40 167 10 wurde vorgeschlagen, Formkörper aus Blähgraphit im Bau von Fußbodenheizungen u.a. Heizungsanlagen sowie in Vorrichtungen für die Schalldämmung und elektromagnetische Abschirmung zu verwenden. Diese Formkörper werden hergestellt, indem entweder
- blähfähiger Graphit in einem Wirbelbett oder bereits in der Endform unter moderater Wärmezufuhr unvollständig expandiert und anschließend bei erhöhter Temperatur in einer Form die Expansion zu Ende geführt wird, oder
- unter moderater Wärmezufuhr unvollständig expandierter blähfähiger Graphit in einer Form zu einem Vorformling gepresst wird und anschließend in der Form bei höherer Temperatur die Expansion zu Ende geführt wird oder
- eine feuchte Zubereitung von blähfähigem Graphit in einer Form unter Wärmezufuhr expandiert wird.
Die Endstufe der Expansion erfolgt also in jedem Fall in der Endform, und nach Vollendung der Expansion ist keine Kompaktierung vorgesehen. Die Form muss so ausgelegt sein, dass sie einerseits weitgehend geschlossen ist, damit das Material die gewünschte Geometrie annimmt, andererseits aber das Entweichen von Luft zulässt. Die mit diesem Verfahren erhaltenen Formkörper sollen formstabil sein und eine homogene Dichte aufweisen. In bevorzugten Varianten der o.g. Verfahren werden dem blähfähigen Graphit verschiedene Zuschlags- und Hilfsstoffe, insbesondere Bindemittel, zugesetzt.
Da im vorstehend beschriebenen Herstellungsverfahren die Expansion des gleichmäßig in der Form verteilten blähfähigen Graphits in alle Raumrichtungen erfolgt, werden die Schichtebenen des Graphits in den Formkörpern keine ausgeprägte Vorzugsorientierung annehmen, und daher wird die Wärmeleitfähigkeit dieser Formkörper kaum richtungsabhängig sein. Für die Anwendung in Verbindung mit flächig angeordneten Heizungselementen wie beispielsweise Wand-, Decken- oder Fußbodenheizungen ist jedoch eine bevorzugte Wärmeleitung in der Fläche wünschenswert, um eine schnelle und gleichmäßige Wärmeverteilung über die Fläche zu erreichen. Weitere Nachteile des vorstehend beschriebenen Standes der Technik sind das diskontinuierliche Herstellungsverfahren und der relativ hohe Aufwand für die Herstellung der entlüftbaren Formen.

Demgegenüber werden erfindungsgemäß Wärmeleitplatten, welche verdichtetes Graphitexpandat enthalten, bereit gestellt, in denen die Wärmeleitung bevorzugt entlang der Plattenfläche erfolgt. Diese Wärmeleitplatten sind ohne Zusatz von Binder und Zuschlagstoffen formstabil. Weiterhin wird ein Verfahren aufgezeigt, mit dem sich solche Wärmeleitplatten aus expandiertem Graphit kontinuierlich herstellen lassen.

Die Herstellung von expandiertem Graphit (Graphitexpandat) ist bekannt u.a. aus der US-A 3 404 061. Für die Herstellung von expandiertem Graphit werden Graphiteinlagerungsverbindungen bzw. Graphitsalze, z.B. Graphithydrogensulfat oder Graphitnitrat, schockartig erhitzt. Dabei vergrößert sich das Volumen der Graphitpartikel um den Faktor 200 bis 400, und die Schüttdichte sinkt auf 2 bis 20 g/l. Das so erhaltene sog. Graphitexpandat besteht aus wurm- oder ziehharmonikaförmigen Aggregaten.
Wird der vollständig expandierte Graphit unter gerichteter Einwirkung eines Druckes kompaktiert, so ordnen sich die Schichtebenen des Graphits bevorzugt senkrecht zur Einwirkungsrichtung des Druckes an, wobei sich die einzelnen Aggregate untereinander verhaken. Dadurch lassen sich ohne Binderzusatz selbsttragende flächige Gebilde, z.B. Bahnen oder Platten, herstellen. Auf diesem Effekt, der aus der Herstellung von Graphitfolien mit einer Dicke von 0,15 bis 3 mm, die beispielsweise als Halbzeug für die Herstellung von Flachdichtungen dienen, bekannt ist, basiert die Herstellung und Funktionsweise der erfindungsgemäßen Wärmeleitplatten. Aufgrund der gerichteten Einwirkung des Druck während der Kompaktierung des Graphitexpandats weisen die erfindungsgemäßen Wärmeleitplatten eine strukturelle Anisotropie auf, und daraus resultiert die vorteilhafte Anisotropie bestimmter Eigenschaften der erfindungsgemäßen Wärmeleitplatten. Wegen der Vorzugsorientierung der Graphitschichtebenen parallel zur Plattenfläche ist in den erfindungsgemäßen Wärmeleitplatten die Wärmeleitung parallel zur Fläche (d.h. in lateraler Richtung) bevorzugt gegenüber der Wärmeleitung senkrecht zur Plattenfläche. Somit vereinen die erfindungsgemäßen Wärmeleitplatten die von Graphitfolie bekannte Anisotropie der Wärmeleitfähigkeit mit anderen für die vorgesehenen Anwendungen vorteilhaften Eigenschaften des expandierten Graphits wie geringes Gewicht, hohe Temperaturstabilität, Fähigkeit zur elektromagnetischen Abschirmung, flammenhemmende Wirkung, Korrosionsbeständigkeit und gute Anpassung an benachbarte Oberflächen.

Weitere Einzelheiten, Merkmale und Vorteile der Erfindung ergeben sich aus der folgenden detaillierten Beschreibung, den Figuren und den Ausführungsbeispielen.
In den Figuren zeigen:
- Figur 1 a-c: Querschnittsdarstellungen der erfindungsgemäßen Wärmeleitplatte mit Rohren für die Verteilung eines Wärmeträgers
- Figur 2: Querschnitt eines Bauelements für eine Klimadecke mit der erfindungsgemäßen Wärmeleitplatte
- Figur 3: Draufsicht auf eine erfindungsgemäße Wärmeleitplatte mit darin eingebetteter Heizspirale

Die erfindungsgemäßen Wärmeleitplatten sind zwischen 8 und 50 mm dick. Besonders bevorzugt sind jedoch Platten mit Dicken zwischen 20 und 40 mm. Typische Abmessungen für in der Bautechnik eingesetzte Wand,- Fußboden und Deckenelemente liegen zwischen 100 x 60 und 300 x 100 cm. Die erfindungsgemäßen Wärmeleitplatten sind jedoch nicht an diese Abmessungen gebunden. Länge und Breite sind entsprechend dem beabsichtigten Einsatzzweck wählbar, da das Herstellverfahren keine engen Grenzen setzt. Die Dichte des expandierten Graphits in den erfindungsgemäßen Wärmeleitplatten liegt im Bereich von 0,01 bis 0,5 g/cm³, bevorzugt zwischen 0,05 und 0,25 g/cm³ .Für den Einsatz in der Bautechnik entsprechen die erfindungsgemäßen Wärmeleitplatten damit den Anforderungen an Leichtbauplatten (Rohdichte < 400 kg/m³)

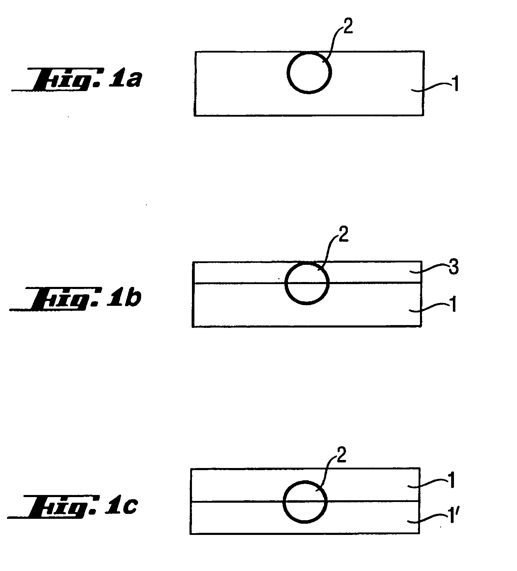

Die Wärmeleitfähigkeit der erfindungsgemäßen Wärmeleitplatten beträgt in der Richtung parallel zur Plattenfläche mindestens 5,5 W/m*K und in der Richtung senkrecht zur Plattenfläche 3,6 W/m*K. Die Wärmeleitfähigkeit parallel zur Fläche ist also mindestens um 50% größer als senkrecht zur Fläche. Das Verhältnis der Wärmeleitfähigkeit parallel zur Plattenfläche zur Wärmeleitfähigkeit senkrecht zur Plattenfläche ist um so größer, je stärker die Verdichtung des expandierten Graphits, also je größer die Dichte der Wärmeleitplatte ist.
Die erfindungsgemäße Wärmeleitplatte kann z. B. in Verbindung mit Heizungen, die einen flüssigen Wärmeträger nutzen, oder auch mit elektrischen Heizungen eingesetzt werden. Für den Transport eines fluiden Wärmeträgers, z.B. Wasser, werden in der erfindungsgemäßen Wärmeleitplatte Rohre aus Metall, beispielsweise Kupfer, oder Kunststoff, beispielsweise Polypropylen oder vernetztem Polyethylen, vorgesehen. Rohre aus Metall werden wegen des besseren Wärmeüberganges bevorzugt. Ein Rohr 2 ist beispielsweise so weit in die Wärmeleitplatte 1 eingebettet, dass es bündig mit der Plattenoberfläche abschließt (Figur 1a), oder teilweise eingebettet, d.h. ein Teil des Umfangs des Rohres 2 ragt reliefartig aus der Oberfläche der Wärmeleitplatte 1 heraus (Figur 1b). Der Raum 3 um die aus der Plattenoberfläche herausragenden Rohre wird mit einem geeigneten Material verfüllt, beispielsweise Estrich oder Graphit-Mahlgut, auf dem Estrich aufgetragen wird. Heizdrähte für eine elektrische Beheizung können auf der Plattenoberfläche verlegt oder in die Plattenoberfläche eingepresst werden.
Alternativ können Rohre 2 oder Heizelemente auch zwischen zwei Wärmeleitplatten 1 und 1' gelegt werden, die dann zusammengepresst werden (Figur 1c). Es hat sich gezeigt, dass solche Verbundplatten aus zwei zusammengepressten Wärmeleitplatten aus expandiertem Graphit sehr stabil sind, sie lassen sich an der Grenzfläche der Platten nicht wieder lösen. Bevorzugt werden für diese Variante Platten mit geringen Dicken verwendet, um eine Verbundplatte zu erhalten, deren Dicke den Durchmesser des eingebetteten Rohres nur geringfügig übersteigt. Ein großer Abstand zwischen Plattenoberfläche und in der Platte eingebettetem Heizelement bzw. -rohr ist nachteilig, da in den erfindungsgemäßen Wärmeleitplatten die Wärmeleitung senkrecht zur Plattenebene geringer ist als parallel zur Plattenebene. Die Rohre bzw. Heizdrähte sind so angeordnet, dass sie eine gleichmäßige Verteilung der Wärme über die Plattenfläche ermöglichen, beispielsweise in einem mäanderförmig oder spiralförmigen Muster. Die Heizdrähte elektrischer Heizungen sind aus demselben Grund bevorzugt gitter- oder mäanderförmig angeordnet. Aufgrund der hohen Wärmeleitfähigkeit der erfindungsgemäßen Wärmeleitplatte müssen die Heizrohre oder -drähte auf der zu beheizenden Fläche aber kein so dichtes Raster bilden wie bei herkömmlichen Wand-, Decken- oder Fußbodenheizungen nötig, um eine gleichmäßige Wärmeverteilung zu erreichen. Das heißt, die Maschen des Gitters, die Schlingen des Mäanders oder die Windungen der Spirale müssen weniger eng sein, und es werden weniger Gittermaschen, Mäanderschlingen oder Spiralwindungen pro Fläche benötigt. Dadurch verringert sich die Länge des Rohres bzw. Heizdrahtes. So lässt sich mit der erfindungsgemäßen Wärmeleitplatte der Bedarf an Rohrmaterial oder Heizdraht um bis zu 50% reduzieren im Vergleich zu Wand-, Decken- oder Fußbodenheizungen ohne Wärmeleitplatte.
Das Einbetten von Rohren und Heizdrähten in die erfindungsgemäße Wärmeleitplatte geschieht entweder direkt auf der Baustelle, oder es werden vorgefertigte Bauelemente aus den erfindungsgemäßen Wärmeleitplatten und Heizdrähten bzw. -rohren eingesetzt.

In ihrer einfachsten Ausführungsform bestehen die erfindungsgemäßen Wärmeleitplatten vollständig aus expandiertem Graphit. Zuschlags- und Hilfsstoffe, insbesondere Bindemittel, sind für die Funktion und die Formstabilität der erfindungsgemäßen Wärmeleitplatten nicht erforderlich. Jedoch lassen sich die Wärmeleitfähigkeit und die mechanische Stabilität der erfindungsgemäßen Platten steigern, indem dem Ausgangsmaterial Graphitexpandat Metall- oder/und Carbonfasern zugesetzt werden. Bevorzugt beträgt die Länge dieser Fasern 0,2 bis 5 mm. Der Massenanteil der Fasern liegt bevorzugt zwischen 5 und 40 %.
Eine weitere Ausführungsform der erfindungsgemäßen Wärmeleitplatte ist dadurch gekennzeichnet, dass die Wärmeleitplatten komplett oder teilweise mit Kunststoffen, beispielsweise Harzen oder Thermoplasten imprägniert werden, um die Dichtigkeit und die Beständigkeit gegen mechanische und andere Umwelteinwirkungen zu erhöhen.
Alternativ oder zusätzlich können eine oder mehrere Oberflächen der Wärmeleitplatten partiell oder komplett mit Anstrichen, Überzügen oder Beschichtungen versehen sein, die bestimmte Funktionen erfüllen wie u.a. Verbesserung der Optik und Erleichterung der Handhabbarkeit der Wärmeleitplatten, Brandschutz, Wirkung als Wasserdampfsperre, Verbesserung der Wärmedämmung und Schalldämmung und Verminderung der Stoßempfindlichkeit.
Ein Überzug, beispielsweise eine Lackschicht, oder eine Kunststoffschicht auf der Plattenoberfläche bewirkt vorzugsweise nicht nur eine Verbesserung der Optik und der Handhabbarkeit, sondern übernimmt oder unterstützt auch bestimmte bauphysikalische Funktionen. Beispielsweise wird mit einer metallhaltigen Lackschicht eine Verbesserung der elektromagnetischen Abschirmung erreicht. Eine reflektierende Lackschicht verbessert die Wärmeabstrahlung in den angrenzenden Raum. Diese Funktionen erfüllt auch eine Beschichtung mit Metallfolie, beispielsweise Aluminiumfolie.
Wärmedämmende Beschichtungen bestehen beispielsweise aus expandiertem Polystyrol, aus Polyurethan oder aus Glas- oder Steinwolle. Diese werden bevorzugt auf der dem zu beheizenden Raum abgewandten Oberfläche der Wärmeleitplatten angebracht, um Wärmeverluste zu vermeiden
Weitere geeignete Materialien zur Beschichtung der erfindungsgemäßen Wärmeleitplatte mit einer weiteren Funktionsschicht sind Vliese und Papiere, Holzfurniere, flächige textile Materialien (Gewebe, Gelege, Gewirke, Gestricke u.ä.), Lochbleche sowie Folien aus Kunststoff oder Metall. Diese Schichtverbunde sind besonders vorteilhaft, weil sie neben der Wärmeleitung zusätzliche bauphysikalische Funktionen erfüllen (s.o.) und weil die mechanische Stabilität der Wärmeleitplatte durch den Verbund gestärkt wird.
Die Stirnseiten der Wärmeleitplatten werden bevorzugt mit geeigneten Materialien z.B. zur Verbesserung der Optik und Verminderung der Stoßempfindlichkeit beschichtet, beispielsweise mit Holzfurnieren, Kunststoff- oder Metallbändern.
Für den weiteren bautechnischen Einsatz der erfindungsgemäßen Wärmeleitplatte ist es vorteilhaft, mindestens eine Oberfläche teilweise oder komplett mit einer die Anbindung an andere Baustoffe ermöglichenden Beschichtung zu versehen. Geeignete Beschichtungsmaterialien hierfür sind Spachtel-, Putz- und Estrich-, sowie Mörtel- und Betonmassen.

Die erfindungsgemäßen Wärmeleitplatten aus expandiertem Graphit sind nicht auf die einfache flache Plattenform beschränkt. Die erfindungsgemäßen Wärmeleitplatten enthalten beispielsweise Strukturelemente wie Vertiefungen, Nuten oder Sicken, Rändel und Kordel oder genarbten Oberflächen, Fugen und Durchbrüche und andere partielle Verformungen. Weiterhin können in den erfindungsgemäßen Platten Stifte, Winkeleisen, Locheisen, Haken, Anker oder andere Verbindungselemente eingesteckt sein, welche aus den Plattenoberflächen oder -stirnflächen herausragen und eine form- und/oder kraftschlüssige Verbindung zu benachbarten Wärmeleitplatten oder anderen Bauelementen herstellen.

Aus den erfindungsgemäßen Wärmeleitplatten lassen sich in Verbindung mit üblichen bautechnischen Materialien auch komplette Bauelemente, bevorzugt Leichtbauelemente, herstellen. Diese Verbundbauelemente umfassen mindestens eine erfindungsgemäße Wärmeleitplatte und mindestens ein weiteres Bauelement, beispielsweise Holzplatten, Gipskartonplatten, Ziegel, Bims, Kalksandstein, Schamottsteine, Fliesen, Porenbetonsteine oder -platten, Liaporsteine oder Klinker.
Für die Herstellung der o.g. Verbünde aus Wärmeleitplatten expandiertem Graphit und den o.g. Schichtstoffen oder Baustoffen wird entweder die Wärmeleitplatte oder/und der andere Bestandteil des Verbundes auf der mit dem jeweils anderen Material zu verbindenden Oberfläche mit einem Klebstoff oder einem anderen die Haftung der Verbundpartner bewirkenden Mittel, z.B. Spachtel- oder Putzmasse oder Mörtel oder einem anderen Bindemittel ausgerüstet. Es sind aber auch formschlüssige Verbindungen zwischen den einzelnen Verbundbestandteilen möglich, beispielsweise Nut/Feder-Verbindungen oder Schnappverbindungen wie z.B. federnde Haken.

Die Herstellung der erfindungsgemäßen Wärmeleitplatten erfolgt in einem kontinuierlichen Verfahren, das folgende grundlegende Stufen umfasst: (i) Vorverdichten des Graphitexpandates mit optionaler Nachverdichtung zu einer Bahn der gewünschten Dichte und Dicke und (ii) ggf. Nachbearbeitungsprozesse zur Beschichtung, Formgebung und Herstellung von Materialverbünden. Die Nachbearbeitungsprozesse erfolgen vorteilhafterweise soweit möglich kontinuierlich an der Bahn und nur soweit erforderlich diskontinuierlich an den von der Bahn abgelängten Platten.

Bei der bekannten Verfahrensweise zur Herstellung von Graphitfolie werden die expandierten Graphitpartikel über einen Vorverdichter und Walzenpaare, in der Regel zwei Walzenpaare, geführt, wobei das Expandat dem Vorverdichter kontinuierlich zugeführt wird. Zwischen den Walzenpaaren sind Aufheizzonen angeordnet, in denen das Material erhitzt wird. Die Temperaturen in diesen Aufheizbereichen liegen bei ca. 600 °C und dienen dazu, die Luft aus dem dichter werdenden Material zu verdrängen. Sowohl im Vorverdichter als auch in den Walzenpaaren erfährt das Graphitexpandat eine gerichtete Einwirkung von Druck, der eine parallele Orientierung der Schichtebenen in den Graphitpartikeln bewirkt. Mit diesem Verfahren ist es möglich, sehr dünne Folien (0,15 bis 3 mm dick) zu erhalten.
Für die erfindungsgemäßen Wärmeleitplatten sind so geringe Dicken nicht erforderlich. Es hat sich gezeigt, dass aus Graphitexpandat mit einer Schüttdichte im Bereich von 2,5 bis 5 g/l bereits durch eine Vorverdichtung zwischen Textilbändern, d.h. ohne weitere Verdichtung durch Walzenpaare Bahnen mit einer ausgeprägten Orientierung der Schichtebenen des Graphits erhalten werden.

Die Bahnen können direkt aus dem Vorverdichter kommend weiter verarbeitet, beispielsweise imprägniert oder mit anderen Materialien beschichtet werden.
Gegebenenfalls werden dem als Ausgangsmaterial dienenden Expandat, bevor es in den Vorverdichter gegeben wird, Carbon- oder Metallfasern zugesetzt.
Wenn eine Plattendicke von nur 10 bis 15 mm oder/und eine hohe Materialdichte (um 0,5 g/cm³) benötigt wird, ist jedoch es sinnvoll, die kontinuierlich aus dem Vorverdichter kommende Graphitbahn noch zwischen ein und/oder zwei Walzenpaaren zu führen, wobei auch eine Aufheizung zwischen den Walzenpaaren möglich ist. Zweckmäßigerweise wird dieser Walzprozess mit dem Aufbringen von Deckschichten aus anderen flächigen Materialien, wie z. B. Vliese und Papiere, flächige textile Materialien (Gewebe, Gelege, Gewirke, Gestricke u.ä.) sowie Folien aus Kunststoff oder Metall kombiniert.

In der folgenden Stufe des Verfahrens, die sich entweder kontinuierlich oder diskontinuierlich anschließt, werden die aus dem kontinuierlichen Vorverdichtungsprozess mit optionaler Nachverdichtung erhaltenen Graphitbahnen bzw. die aus diesen Bahnen geschnittenen oder herausgestanzten Platten in die gewünschte Gebrauchsform gebracht. Diese Verfahrensstufe, die im folgenden allgemein als Nachbearbeitung bezeichnet wird, umfasst eine große Vielfalt von Bearbeitungsprozessen wie Imprägnieren, Beschichten, partielles Umformen und/oder Verdichten der Platten/Bahnen in einem Kaltpressverfahren, Besäumen, Formgebung beispielsweise durch mechanisches Bearbeiten der Bahnen/Platten, Einbetten von Heizungsrohren oder -drähten sowie die Herstellung von Verbundbauelementen aus den erfindungsgemäßen Wärmeleitplatten und gebräuchlichen Baustoffen.

Für die Herstellung von Imprägnierungen und Oberflächenbeschichtungen steht nach dem Stand der Technik eine große Vielfalt geeigneter Verfahren zur Verfügung. Die Imprägnierung kann beispielsweise im Tauch-, Sprüh- oder Druckverfahren, im Vakuumverfahren bzw. einer Kombination aus Vakuum- und Druckverfahren sowie auch in einem Wirbelbett erfolgen.
Unter Beschichten werden hier alle Prozesse verstanden, die dazu dienen, die Oberfläche der erfindungsgemäßen Platte mit einer Schicht aus einem anderen Material zu überziehen. Dieses Material kann sowohl in einer Flüssigkeit gelöst oder dispergiert, als auch pulverförmig als auch als flächiger Schichtstoff vorliegen. Solche Beschichtungen können beispielsweise durch Streich-, Lackier-, Sprüh-, Laminier- oder Aufwalzverfahren hergestellt werden, wobei bei diesen Verfahren im Gegensatz zum Imprägnierverfahren keine vollständige Tränkung des Inneren der erfindungsgemäßen Platte stattfindet. In einer besonderen Ausführungsform der Erfindung werden die Bauteile mit einer Kunststoffschmelze überzogen. Dies geschieht beispielsweise in einem temperierten Wirbelbett, bei einem Extrusionsverfahren oder, wenn die Plattengröße dies zulässt, auch in einem Spritzgießverfahren. Verbünde zwischen den erfindungsgemäßen Wärmeleitplatten und anderen Schichtstoffen wie Papierbahnen, Folien, Metallblechen, Holzfurnieren, Vliesen oder flächigen Textilgebilden oder Bauhalbzeugen wie Polystyrol- und Polyurethanplatten, Glasfaser- und Steinwollplatten, Holzplatten, Gipskartonplatten, Schamottsteinen, Ziegeln, Kalksandstein, Bims, Fliesen, Porenbetonsteinen oder -platten oder Liaporsteinen werden durch Anwendung von Klebstoffen, Bindemitteln, Spachtelmassen, Mörtel und Putzen auf einer der oder auf beiden miteinander zu verbindenden Oberflächen, oder durch Aufbau einer formschlüssigen Verbindung zwischen den Materialien, beispielsweise eine Nut/Feder-Verbindung oder Schnappverbindungen wie federnde Haken, hergestellt.
Mittels Kaltpressverfahren können die Graphitbahnen mit Walzenpaaren oder diskontinuierlich mit Pressen nochmals ganzflächig oder partiell verformt und verdichtet werden. Mittels Prägewalzen kann gleichzeitig zur Verdichtung eine Formgebung vorgenommen werden, beispielsweise zur Herstellung von Nuten oder Sicken, Rändel und Kordel oder genarbten Oberflächen. Dies kann sowohl vor als auch nach dem Aufbringen von Deckschichten geschehen.
Geeignete Verfahren zur Herstellung von Nuten, Fugen oder Durchbrüchen sind beispielsweise Schneiden, Stanzen, Prägen, Fräsen, Drehen und Hobeln. Eine besonders bevorzugte Methode der mechanischen Bearbeitung ist das Wasserstrahlschneiden. Alternativ können für die Bearbeitung abrasive Partikelstrahlen (Sandstrahlen, Kügelchen aus gefrorenem CO₂) oder Laserstrahlen eingesetzt werden.
Im Stadium der Nachbearbeitung erfolgt ggf. auch die Einbringung von funktionellen Komponenten wie Rohren für die Verteilung eines Wärmeträgers oder Heizdrähten. Alternativ kann dies auch direkt vor Ort auf der Baustelle geschehen.
Die Nachbearbeitung erfolgt insbesondere dann diskontinuierlich, wenn Beschichtungen aus Materialien oder Verbunde mit Materialien hergestellt werden, die nicht als Rollenware verfügbar sind, sondern nur als Plattenware, beispielsweise Metallbleche oder Plattenware aus Karton, Gips und Holz. Die diskontinuierliche Verfahrensweise ist auch dann nötig, wenn solche Flächen beschichtet oder anderweitig bearbeitet werden müssen, die in der unmittelbar nach dem Verdichten erhaltenen Bahn noch gar nicht existieren, wie die erst beim Schneiden der Bahnen/Ablängen der Platten entstehenden Stirnseiten der Platten. Weiterhin erlaubt die diskontinuierliche Nachbearbeitung eine räumliche und zeitlichen Trennung der Arbeitsabläufe.

### Ausführungsbeispiel 1

Durch kontinuierliches Verdichten von pulverförmigem Graphitexpandat zwischen zwei Textilbändern wurde eine Bahn mit einer Dicke von 25 mm hergestellt. Aus dieser Bahn wurde eine Probe mit einer Länge und einer Breite von jeweils 30 cm ausgeschnitten, deren Dichte bestimmt wurde. Es wurde ein Wert von 0,027 g/cm³ ermittelt. Außerdem wurden die spezifische Wärmeleitfähigkeit und der spezifische elektrische Widerstand der Probe in x-, y-und z-Richtung gemessen. Die Resultate sind in Tabelle 1 zusammengefasst.

**Tabelle 1**

| Meßgröße | x-Richtung | y-Richtung | z-Richtung |
|---|---|---|---|
| Spez. Elektrischer Widerstand/ Ω µm | 370 | 600 | 375 |
| Spez. Wärmeleitfähigkeit/ W/m*K | 5,7 | 5,5 | 3,4 |

Sowohl die elektrische als auch die Wärmeleitfähigkeit weisen eine ausgeprägte Anisotropie auf. Bevorzugt erfolgt die Leitung von Wärme und elektrischem Strom parallel zur Plattenoberfläche, d.h. entlang der Graphitschichtebenen.

### Ausführungsbeispiel 2

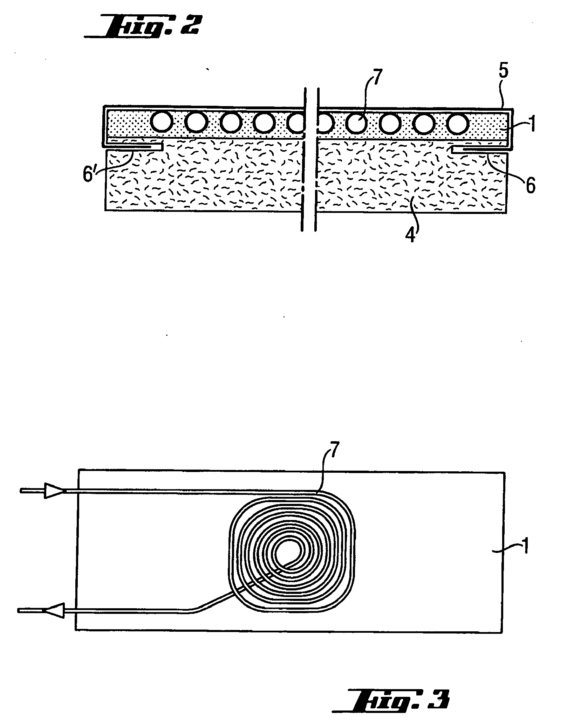

Es wurden Schichtverbundbauteile mit einer Fläche von 30 x 70 cm hergestellt, deren Aufbau in Figur 2 dargestellt ist. Der Schichtverbund umfasst eine 18 mm dicke Hartfaserplatte 4, eine 9 mm dicke Wärmeleitplatte 1 aus verdichtetem Graphitexpandat und ein 1 mm dickes Lochblech 5. Die Hartfaserplatte 4 an der Rückseite der Wärmeleitplatte dient der Wärmedämmung, das Lochblech 5 auf der Vorderseite der Verbesserung der Optik. Hartfaserplatte und Wärmeleitplatte wurden miteinander verklebt. Das Lochblech umgreift den Schichtverbund an den Längsseiten und wird mit Längsnuten 6, 6' in der Hartfaserplatte 4 festgehalten. Dieser Schichtverbund ist beispielsweise geeignet zum Bau einer Klimadecke. In die der Hartfaserplatte 4 abgewandte Oberfläche der Wärmeleitplatte 1 ist ein in Form einer archimedischen Spirale 7 gewundenes Rohr (im folgenden als Heizspirale 7 bezeichnet) mit einem Durchmesser von 6 mm aus Kunststoff so eingebettet, das es bündig mit der Plattenoberfläche abschließt. Der Durchmesser der äußersten Windung der Spirale betrug 21 cm. Die Spirale 7 war etwa in der Mitte der Platte 1 positioniert, dass heißt der Abstand der äußersten Windung der Spirale 7 zum rechten Rand der Platte 1 war ungefähr genauso groß wie zum linken Rand der Platte 1, und der Abstand der äußersten Windung der Spirale zum oberen Rand der Platte 1 war ungefähr genauso groß wie zum unteren Rand der Platte 1. Figur 3 zeigt in Draufsicht diese Wärmeleitplatte 1 mit der darin eingebetteten Heizspirale 7. Für Vergleichszwecke wurde ein Schichtverbund mit gleichen Abmessungen hergestellt, der anstelle der erfindungsgemäßen Wärmeleitplatte eine Gipskartonplatte mit drei nebeneinander eingebetteten Heizspiralen der gleichen Größe wie die in die Graphitplatte eingebaute Heizspirale enthielt. Die Heizspiralen in beiden Versuchsanordnungen wurden mit 50 °C warmem Wasser durchströmt. Die Veränderung der Temperaturverteilung auf den Oberflächen beider Platten in Abhängigkeit von der Dauer der Durchströmung mit warmem Wasser wurde mittels Infrarot-Thermographie verfolgt. Zu Beginn des Tests wiesen beide Oberflächen eine Temperatur von 25 °C auf, Temperaturgradienten über die Oberfläche waren nicht erkennbar. Der weitere zeitliche Verlauf der Temperaturänderung der Platten im von der Heizspirale umschlossenen Bereich und in dessen Peripherie sind aus Tabelle 2 ersichtlich.

| | Heizspirale in erfindungsgemäßer Wärmeleitplatte | | Heizspirale in Gipsplatte | |
|---|---|---|---|---|
| Zeitdauer / min | T/°C | T/°C | T/°C | T/°C |
| | Von Heizspirale umschlossener Bereich | Peripherie | Von Heizspirale umschlossener Bereich | Peripherie |
| 0 | 25 | 25 | 25 | 25 |
| 1:15 | 30-32 | 27-29 | 27-29 | 25 |
| 2:15 | 32-34 | 27-31 | 29-30 | 27-29 |
| 3:45 | 34-36 | 31-34 | 30-33 | 28-30 |
| 8 | 36-37 | 34-36 | 34-36 | 31-33 |
| 15 | 37-39 | 34-37 | 35-37 | 32-34 |

In der Versuchsanordnung mit der erfindungsgemäßen Wärmeleitplatte wird dank der hohen lateralen Wärmeleitfähigkeit des expandierten Graphits mit nur einer Heizspirale im Gegensatz zu der Versuchsanordnung mit einer herkömmlichen Gipsplatte und drei Heizspiralen eine deutlich schnellere Aufheizung und gleichmäßigere Temperaturverteilung erreicht.

### Bezugszeichenliste

- 1,1': Wärmeleitplatten
- 2: Rohr für den Durchfluss eines fluiden Wärmetransportmediums
- 3: Mit Estrich oder Graphit-Mahlgut verfülllter Raum
- 4: Hartfaserplatte
- 5: Lochblech
- 6,6': Längsnuten
- 7: Heizspirale

## Patentansprüche

1. Fußboden-, Decken- oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat, **dadurch gekennzeichnet, dass** die Wämeleitung parallel zur Plattenfläche mindestens 5,5 W/m*K beträgt, und um mindestens 50 % höher ist als die Wärmeleitfähigkeit senkrecht zur Plattenfläche, und dass die Dicke der Leichtbau-Wärmeleitplatte zwischen 8 mm und 50 mm beträgt.

2. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach Anspruch 1, **dadurch gekennzeichnet, dass** die Dicke der Platte zwischen 15 mm und 40 mm liegt.

3. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach Anspruch 1 oder 2, **dadurch gekennzeichnet, dass** die Dichte des Plattenmaterials zwischen 0,01 g/cm³ und 0,45 g/cm³ liegt.

4. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der Ansprüche 1 bis 3, **dadurch gekennzeichnet, dass** die Dichte des Plattenmaterials zwischen 0,05 g/cm³ und 0,25 g/cm³ liegt.

5. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der Anspruche 1 bis 4, **dadurch gekennzeichnet, dass** dem Graphitexpandat Metall- und/oder Carbonfasern zugesetzt werden.

6. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** die Platte eine Imprägnierung aufweist.

7. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem er vorhergehenden Ansprüche, **dadurch gekennzeichnet, dass** mindestens eine Oberfläche der Platte komplett oder teilweise mit einem Lack oder einem Kunststoff überzogen ist.

8. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** mindestens eine Oberfläche der Platte komplett oder teilweise mit Metall- oder Kunststofffolie, einem Lochblech, einem textilen Flächengebilde, Holzfurnier, Vlies oder Papier beschichtet ist.

9. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** mindestens eine Oberfläche der Platte komplett oder teilweise mit einem wärmedämmendem Material beschichtet ist.

10. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach Anspruch 9, **dadurch gekennzeichnet, dass** die wärmedämmende Beschichtung expandiertes Polystyrol, Polyurethan, Glas- oder Steinwolle enthält.

11. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** mindestens eine Oberfläche der Platte komplett oder teilweise mit Spachtel-, Putz- und Estrich-, Mörtel- oder Betonmassen beschichtet ist.

12. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** die Platte mindestens eines der Strukturelemente Vertiefungen, Nuten, Sicken, Rändel, Kordel, genarbte Oberflächen, Fugen und Durchbrüche aufweist.

13. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorherigen Ansprüche, **dadurch gekennzeichnet, dass** die Platte Stifte, Winkeleisen, Locheisen, Haken, Anker oder andere Vorrichtungen zur Herstellung einer kraft- oder formschlüssigen Verbindung mit einer anderen Leichtbau-Wärmeleitplatte oder einem anderen Bauelement aufweist.

14. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach einem der vorhergehenden Ansprüche, **dadurch gekennzeichnet, dass** die Leichtbau-Wärmeleitplatte Rohre zur Verteilung eines fluiden Wärmeträgermediums oder Leitungen für eine elektrische Heizung enthält.

15. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach Anspruch 14 mit Rohren zur Verteilung eines fluiden Wärmeträgermediums, **dadurch gekennzeichnet, dass** die Rohre so in die Plattenoberfläche eingebettet sind, dass die Rohrwand bündig mit der Plattenoberfläche abschließt.

16. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat nach Anspruch 14 mit Rohren zur Verteilung eines fluiden Wärmeträgermediums, **dadurch gekennzeichnet, dass** die Rohre so in die Plattenoberfläche eingebettet sind, dass ein Teil des Rohrumfangs reliefartig aus der Plattenoberfläche herausragt.

17. Verbund aus zwei aufeinander liegenden Leichtbau-Wärmeleitplatten aus binderfreiem verdichtetem Graphitexpandat, wobei die Wämeleitung parallel zur Plattenfläche mindestens 5,5 W/m*K beträgt, und um mindestens 50 % höher ist als die Wärmeleitfähigkeit senkrecht zur Plattenfläche, und dass die Dicke der Leichtbau-Wärmeleitplatte zwischen 8 mm und 50 mm beträgt, **dadurch gekennzeichnet, dass** zwischen den beiden Platten Rohre für die Verteilung eines fluiden Wärmeträgermediums oder Leitungen für eine elektrische Heizung eingebettet sind.

18. Fußboden-, Decken oder Wandheizungen oder Klimadecken, zur Wärmeübertragung und Wärmeabfuhr in Gebäuden, Automobilen, in Maschinen und Anlagen und in Behältern mit einer Leichtbau-Wärmeleitplatte aus binderfreiem verdichtetem Graphitexpandat mit Heizleitungen für eine elektrische Beheizung nach Anspruch 14, **dadurch gekennzeichnet, dass** die Heizleitungen in die Plattenoberfläche eingebettet sind oder dass die Heizleitungen auf der Plattenoberfläche verlegt sind.

19. Verbundbauelement für den Einsatz in der Bautechnik, umfassend mindestens eine Leichtbau-Wärmeleitplatte aus binderfreiem verdichtetem Graphitexpandat, wobei die Wämeleitung parallel zur Plattenfläche mindestens 5,5 W/m*K beträgt, und um mindestens 50 % höher ist als die Wärmeleitfähigkeit senkrecht zur Plattenfläche, und dass die Dicke der Leichtbau-Wärmeleitplatte zwischen 8 mm und 50 mm beträgt und mindestens ein weiteres Bauelement aus der Gruppe Holzplatten, Gipskartonplatten, Schamottsteine, Fliesen, Porenbetonsteine oder-platten, Ziegel, Kalksandstein, Bims, Liaporsteine oder Klinker.

20. Verbundbauelement nach Anspruch 19, **dadurch gekennzeichnet, dass** die Bauelemente durch einen Klebstoff, einen Haftvermittler oder ein Bindemittel miteinander verbunden sind.

21. Verbundbauelement nach Anspruch 20, **dadurch gekennzeichnet, dass** die Bauelemente formschlüssig miteinander verbunden sind.

22. Verfahren zur Herstellung einer Leichtbau-Wärmeleitplatte aus binderfreiem verdichtetem Graphitexpandat, wobei die Wämeleitung parallel zur Plattenfläche mindestens 5,5 W/m*K beträgt, und um mindestens 50 % höher ist als die Wärmeleitfähigkeit senkrecht zur Plattenfläche, und dass die Dicke der Leichtbau-Wärmeleitplatte zwischen 8 mm und 50 mm beträgt, **dadurch gekennzeichnet, dass** kontinuierlich zugeführtes Graphitexpandat in einem Vorverdichter zwischen Textilbändern zu einer Bahn verdichtet wird, von welcher Platten in der gewünschten Größe abgelängt werden.

23. Verfahren nach Anspruch 22, **dadurch gekennzeichnet, dass** die Dicke der Bahn zwischen 8 mm und 50 min und die Dichte des Bahnmaterials zwischen 0,01 g/cm³ und 0,5 g/cm³ liegt.

24. Verfahren nach einem der Ansprüche 22 oder 23, **dadurch gekennzeichnet, dass** die im Vorverdichter erhaltene Bahn anschließend zwischen Walzenpaaren nachverdichtet wird, wobei Vorverdichtung und Nachverdichtung einen kontinuierlichen Prozessablauf bilden.

25. Verfahren nach Anspruch 24, **dadurch gekennzeichnet, dass** der Prozess des Nachverdichtens zwischen Walzenpaaren mit dem Aufbringen einer Beschichtung kombiniert ist.

26. Verfahren nach einem der Ansprüche 22 bis 25, **dadurch gekennzeichnet, dass** die vorverdichtete und ggf. nach verdichtete Bahn imprägniert oder/und beschichtet wird, wobei die Schritte Verdichtung, ggf. Nachverdichtung, und Imprägnierung oder/und Beschichtung einen kontinuierlichen Prozessablauf bilden.

27. Verfahren nach einem der Ansprüche 22 bis 26, **dadurch gekennzeichnet, dass** die Bahnen oder die daraus abgelängten Platten mit einem Wasserstrahl, Laserstrahl oder einem abrasiven Partikelstrahl mechanisch bearbeitet und strukturiert werden.

28. Verfahren nach einem der Ansprüche 22 bis 27, **dadurch gekennzeichnet, dass** die Bahnen oder die daraus abgelängten Platten mit Prägewalzen strukturiert werden.

29. Verfahren nach einem der Ansprüche 22 bis 28, **dadurch gekennzeichnet, dass** die Bahnen oder die daraus abgelängten Platten mittels Kaltpressen verformt und verdichtet werden.

30. Verfahren nach einem der Ansprüche 22 bis 29, **dadurch gekennzeichnet, dass** in die Oberflächen der Bahnen oder der daraus abgelängten Platten Rohre zur Verteilung eines fluiden Wärmeträgermediums eingebettet werden.

## Claims

1. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, **characterised in that** thermal conduction parallel to the plate face is at least 5.5 W/m*K and is at feast 50 % higher than the thermal conductivity perpendicular to the plate face, and **in that** the thickness of the lightweight heat-conducting plate is between 8 mm and 50 mm.

2. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to claim 1, **characterised in that** the thickness of the plate is between 15 mm and 40 mm.

3. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to either claim 1 or claim 2, **characterised in that** the density of the plate material is between 0.01 g/cm³ and 0.45 g/cm³.

4. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of claims 1 to 3, **characterised in that** the density of the plate material is between 0.05 g/cm³ and 0.25 g/cm³.

5. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of claims 1 to 4, **characterised in that** metal fibres and/or carbon fibres are added to the expanded graphite.

6. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** the plate has an impregnation.

7. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** at least one surface of the plate is covered either completely or in part with a paint or a plastics material.

8. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** at least one surface of the plate is coated either completely or in part with a metal foil or plastics material film, a perforated metal sheet, a textile fabric, wood veneer, non-woven fabric or paper.

9. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** at least one surface of the plate is coated either completely or in part with a heat-insulating material.

10. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to claim 9, **characterised in that** the heat-insulating coating contains expanded polystyrene, polyurethane, glass wool or rock wool.

11. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** at least one surface of the plate is coated either completely or in part with filler, mixed plaster and screed, mortar or concrete.

12. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** the plate comprises at least one of the following structural elements: recesses, grooves, beads, knurls, diamond knurls, grained surfaces, joints and openings.

13. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** the plate comprises pins, angle irons, hollow punches, hooks, anchors or other devices for establishing a non-positive or positive connection to another lightweight heat-conducting plate or to another component.

14. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to any of the preceding claims, **characterised in that** the lightweight heat-conducting plate contains tubes for distributing a fluid heat transfer medium or pipes for an electric heating system.

15. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to claim 14, comprising tubes for distributing a fluid heat transfer medium, **characterised in that** the tubes are embedded in the plate surface such that the tube wall is flush with the plate surface.

16. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite, according to claim 14, comprising tubes for distributing a fluid heat transfer medium, **characterised in that** the tubes are embedded in the plate surface such that part of the tube circumference protrudes from the plate surface in the manner of a relief.

17. Composite made from two lightweight heat-conducting plates which are placed one on top of the other and made of binderless compacted expanded graphite, the thermal conduction parallel to the plate surface being at least 5.5 W/m*K and being at least 50 % higher than thermal conductivity perpendicular to the plate surface, and the thickness of the lightweight heat-conducting plate being between 8 mm and 50 mm, **characterised in that** tubes for distributing a fluid heat transfer medium or pipes for an electric heating system are embedded between the two plates.

18. Underfloor, ceiling or wall heating systems or air-conditioning ceilings for transferring and dissipating heat in buildings, automobiles, in machines and plants and in tanks, comprising a lightweight heat-conducting plate made of binderless compacted expanded graphite and comprising heating pipes for electrical heating according to claim 14, **characterised in that** the heating pipes are embedded in the plate surface or **in that** the heating pipes are laid on the plate surface.

19. Composite component for use in structural engineering, comprising at least one lightweight heat-conducting plate made of binderless compacted expanded graphite, the thermal conduction parallel to the plate surface being at least 5.5 W/m*K and being at least 50 % higher than thermal conductivity perpendicular to the plate surface, and the thickness of the lightweight heat-conducting plate being between 8 mm and 50 mm, and at least one additional component from the group of wooden panels, plasterboard panels, chamotte bricks, nonwoven fabrics, aerated concrete blocks or slabs, bricks, sand-lime brick, pumice, Liapor bricks or clinker.

20. Composite component according to claim 19, **characterised in that** the components are bonded to one another by an adhesive, an adhesion promoter or a binder.

21. Composite component according to claim 20, **characterised in that** the components are positively connected.

22. Method for producing a lightweight heat-conducting plate made of binderless compacted expanded graphite, the thermal conduction parallel to the plate surface being at least 5.5 W/m*K and being at least 50 % higher than thermal conductivity perpendicular to the plate surface and the thickness of the lightweight heat-conducting plate being between 8 mm and 50 mm, **characterised in that** continuously fed expanded graphite is compacted between textile straps in a pre-compactor to form a web, from which plates can be cut to the desired length.

23. Method according to claim 22, **characterised in that** the thickness of the web is between 8 mm and 50 mm and the density of the web material is between 0.01 g/cm³ and 0.5 g/cm³.

24. Method according to either claim 22 or claim 23, **characterised in that** the web produced in the pre-compactor is then recompacted between pairs of rollers, pre-compaction and recompaction forming a continuous process sequence.

25. Method according to claim 24, **characterised in that** the process of recompaction between pairs of rollers is combined with the application of a coating.

26. Method according to any of claims 22 to 25, **characterised in that** the pre-compacted and optionally recompacted web is impregnated and/or coated, the steps of compaction, optional recompaction, impregnation and/or coating forming a continuous process sequence.

27. Method according to any of claims 22 to 26, **characterised in that** the webs or the plates cut to length therefrom are mechanically machined and textured using a water jet, laser beam or an abrasive particle beam.

28. Method according to any of claims 22 to 27, **characterised in that** the webs or the plates cut to length therefrom are textured using embossing rollers.

29. Method according to any of claims 22 to 28, **characterised in that** the webs or the plates cut to length therefrom are deformed and compacted by means of cold pressing.

30. Method according to any of claims 22 to 29, **characterised in that** tubes for distributing a fluid heat transfer medium are embedded in the surfaces of the webs or the plates cut to length therefrom.

## Revendications

1. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant, **caractérisés en ce que** la conduction thermique parallèlement à la surface de plaque est au moins égale à 5,5 W/m*K, et est supérieure d'au moins 50 % à la conductivité thermique perpendiculairement à la surface de plaque, et **en ce que** l'épaisseur de la plaque conductrice de chaleur en construction légère est comprise entre 8 mm et 50 mm.

2. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon la revendication 1, **caractérisés en ce que** l'épaisseur de la plaque est comprise entre 15 mm et 40 mm.

3. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon la revendication 1 ou 2, **caractérisés en ce que** la densité du matériau de plaque est comprise entre 0,01 g/cm³ et 0,45 g/cm³.

4. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications 1 à 3, **caractérisés en ce que** la densité du matériau de plaque est comprise entre 0,05 g/cm³ et 0,25 g/cm³.

5. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications 1 à 4, **caractérisés en ce que** des fibres de métal et/ou de carbone sont ajoutées au graphite expansé.

6. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce que** la plaque présente une imprégnation.

7. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce qu'**au moins une surface de la plaque est revêtue complètement ou partiellement d'une laque ou d'une matière plastique.

8. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce qu'**au moins une surface de la plaque est recouverte complètement au partiellement d'une feuille de métal ou de matière plastique, d'une tôle perforée, d'une structure plane textile, d'un placage en bois, d'un non-tissé ou de papier.

9. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce qu'**au moins une surface de la plaque est recouverte complètement ou partiellement d'un matériau thermiquement isolant.

10. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon la revendication 9, **caractérisés en ce que** le revêtement thermiquement isolant contient du polystyrène expansé, du polyuréthane, de la laine de verre ou de la laine de roche.

11. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce qu'**au moins une surface de la plaque est recouverte complètement ou partiellement de masses de mastic, de crépi et de chape, de mortier ou de béton.

12. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce que** la plaque présente au moins un élément structurel parmi les éléments structurels suivants : creux, rainures, moulures, moletages, cordons, surfaces grainées, joints et traversées.

13. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce que** la plaque présente des broches, des cornières, des fers perforés, des crochets, des ancres ou d'autres dispositifs destinés à réaliser un raccordement par liaison de forces ou de formes avec une autre plaque conductrice de chaleur en construction légère ou un autre élément de construction.

14. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon l'une des revendications précédentes, **caractérisés en ce que** la plaque conductrice de chaleur en construction légère contient des tubes destinés à la distribution d'un agent caloporteur fluide ou des conducteurs pour un chauffage électrique.

15. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon la revendication 14, avec des tubes destinés à la distribution d'un agent caloporteur fluide, **caractérisés en ce que** les tubes sont noyés dans la surface de plaque de telle sorte que la paroi de tube se termine en affleurement avec la surface de plaque.

16. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant selon la revendication 14, avec des tubes destinés à la distribution d'un agent caloporteur fluide, **caractérisés en ce que** les tubes sont noyés dans la surface de plaque de telle sorte qu'une partie de la circonférence de tubes dépasse en relief de la surface de plaque.

17. Composite de deux plaques conductrices de chaleur en construction légère placées l'une sur l'autre, en graphite expansé compressé sans liant, dans lequel la conduction thermique parallèlement à la surface de plaque est au moins égale à 5,5 W/m*K, et est supérieure d'au moins 50 % à la conductivité thermique perpendiculairement à la surface de plaque, et l'épaisseur de la plaque conductrice de chaleur en construction légère est comprise entre 8 mm et 50 mm, **caractérisé en ce que** des tubes destinés à la distribution d'un agent caloporteur fluide ou des conducteurs pour un chauffage électrique sont noyés entre les deux plaques.

18. Chauffages au sol, au plafond ou muraux ou plafonds de climatisation, pour la transmission de chaleur et l'évacuation de chaleur dans des bâtiments, des automobiles, dans des machines et installations et dans des réservoirs avec une plaque conductrice de chaleur en construction légère en graphite expansé compressé sans liant, avec des conducteurs chauffants pour un chauffage électrique selon la revendication 14, **caractérisés en ce que** les conducteurs chauffants sont noyés dans la surface de plaque ou **en ce que** les conducteurs chauffants sont posés sur la surface de plaque.

19. Elément de construction composite pour une utilisation dans la technique de construction, comprenant au moins une plaque conductrice de chaleur en construction légère en graphite expansé compressé sans liant, dans lequel la conduction thermique parallèlement à la surface de plaque est au moins égale à 5,5 W/m*K, et est supérieure d'au moins 50 % à la conductivité thermique perpendiculairement à la surface de plaque, et l'épaisseur de la plaque conductrice de chaleur en construction légère est comprise entre 8 mm et 50 mm, et comprenant au moins un autre élément de construction dans le groupe comprenant des plaques de bois, des plaques de placoplâtre, des briques réfractaires, des carreaux, des blocs ou plaques de béton cellulaire, des tuiles, des briques silico-calcaires, de la pierre ponce, des pierres en Liapor ou du clinker.

20. Elément de construction composite selon la revendication 19, **caractérisé en ce que** les éléments de construction sont raccordés les uns aux autres par une colle, un promoteur d'adhérence ou un liant.

21. Elément de construction composite selon la revendication 20, **caractérisé en ce que** les éléments de construction sont raccordés les uns aux autres par liaison de formes.

22. Procédé de fabrication d'une plaque conductrice de chaleur en construction légère en graphite expansé compressé sans liant, dans lequel la conduction thermique parallèlement à la surface de plaque est au moins égale à 5,5 W/m*K, et est supérieure d'au moins 50 % à la conductivité thermique perpendiculairement à la surface de plaque, et l'épaisseur de la plaque conductrice de chaleur en construction légère est comprise entre 8 mm et 50 mm, **caractérisé en ce que** du graphite expansé amené en continu est compressé dans un précompresseur entre des bandes de textiles pour donner un lé à partir duquel des plaques sont découpées à la dimension souhaitée.

23. Procédé selon la revendication 22, **caractérisé en ce que** l'épaisseur du lé est comprise entre 8 mm et 50 mm, et la densité du matériau de lé est comprise entre 0,01 g/cm³ et 0,5 g/cm³.

24. Procédé selon l'une des revendications 22 ou 23, **caractérisé en ce que** le lé obtenu dans le précompresseur est ensuite post-compressé entre des paires de cylindres, dans lequel la précompression et la post-compression forment un déroulement de processus continu.

25. Procédé selon la revendication 24, **caractérisé en ce que** le processus de post-compression entre des paires de cylindres peut être combiné avec la mise en place d'un revêtement.

26. Procédé selon l'une des revendications 22 à 25, **caractérisé en ce que** le lé précompressé et éventuellement post-compressé est imprégné et/ou revêtu, dans lequel les étapes de compression, éventuellement de post-compression, et d'imprégnation et/ou de revêtement forment un déroulement de processus continu.

27. Procédé selon l'une des revendications 22 à 26, **caractérisé en ce que** les lés ou les plaques découpées à partir des lés sont traités mécaniquement et structurés avec un jet d'eau, un faisceau laser ou un jet de particules abrasives.

28. Procédé selon l'une des revendications 22 à 27, **caractérisé en ce que** les lés ou les plaques découpées à partir des lés sont structurés avec des cylindres de gaufrage.

29. Procédé selon l'une des revendications 22 à 28, **caractérisé en ce que** les lés ou les plaques découpées à partir des lés sont déformés et compressés par pressage à froid.

30. Procédé selon l'une des revendications 22 à 29, **caractérisé en ce que** des tubes destinés à la distribution d'un agent caloporteur fluide sont noyés dans les surfaces des lés ou des plaques découpées à partir des lés.
